# EUROPEAN PATENT SPECIFICATION

(11) **EP 4 404 728 B1**
(45) Date of publication and mention of the grant of the patent: **25.03.2026**
(21) Application number: 21786789.4
(22) Date of filing: 24.09.2021
(51) Int. Cl.: A01D 46/24, A01D 46/30

(54) **FRUIT PICKING ROBOT AND END EFFECTOR THEREFORE**
ROBOTER ZUM ERNTEN VON FRÜCHTEN UND ENDEFFEKTOR DAFÜR
ROBOT DE CUEILLETTE DE FRUITS ET EFFECTEUR D'EXTRÉMITÉ ASSOCIÉ

(43) Date of publication of application: 31.07.2024
(73) Proprietor: ABB Schweiz AG, 5400 Baden (CH)
(72) Inventor: TERPSTRA, Haayo, 7332 BC Apeldoorn (NL)
(74) Representative: Maiwald GmbH
(86) International application number: PCT/EP2021/076397
(87) International publication number: WO 2023/046295

(56) References cited:
- EP-B1- 0 810 818
- WO-A1-2018/057562
- US-A- 3 200 575
- US-A1- 2021 120 739

## Description

The present invention relates to a fruit-picking robot and to an end effector for such a robot.

A common problem of such end effectors is that a certain amount force must be applied to a fruit, or a stalk must be cut in order to detach the fruit from its mother plant, but the fruit and the plant shouldn't be injured in the process. Since fruits on a same plant vary in size, the end effector must adapt to such variations. The principle of operation of such end effectors can vary widely; an end effector can have fingers in different numbers for gripping a fruit by friction or by flexing around it, there can be a tool for cutting a stalk by which the fruit is connected to its mother plant, there can be a suction tool for seizing the fruit etc. What these tools have in common, though, is that once a fruit has been successfully detached from its mother plant, the end effector must move to a collecting box in order to dispose of the fruit before it can return to the plant and pick another fruit.

WO 2018/057562 A1 discloses a fruit picking robot whose end effector comprises a tube with a suction port for picking fruit is formed at one end, a vacuum source is connected to a central region of the tube, so that a fruit picked by the suction port will move through the tube, passing by the central portion, to an opposite end of the tube. When a fruit has reached said opposite end, a first flap descends into the tube, so as to cut the opposite end off from the vacuum, so that when a second flap opens, the fruit falls out. No measures are taken to limit the length of fall, so there is a high risk of the fruit being damaged in the fall. Picking a second fruit before the first one is discharged is not practical, since the second fruit would block the first flap and thus prevent proper operation of the device.

The object of the present invention is to provide a fruit-picking robot and end effector which is highly efficient while minimizing the risk of damage to the fruit.

According to a first aspect of the invention, this object is achieved by an end effector for a fruit picking robot having a distal portion comprising tools for seizing and detaching a fruit from its mother plant, a proximal portion comprising an interface for mounting the end effector to a robot arm, and a storage bay for picked fruit, which is elongate in a longitudinal direction, and which bay has a discharge port extending along the full length of the storage bay in the longitudinal direction and a fruit support member having a longitudinally extending edge which delimits the discharge port. The elongate shape allows to accommodate more than one fruit at a time in the storage bay, so that the end effector doesn't have to move from the plant to a collecting box and back whenever a fruit has been picked. By having the fruit in the storage bay pass across the longitudinally extending edge of the support member and through the discharge port, all fruit can be discharged under similar conditions, without picked fruit bumping into each other in the process. By placing the edge horizontally and close to a surface on which the fruit is to be discharged, a dropping distance can be made small or zero for each fruit in the storage bay.

Preferably, the support member is pivotable by a longitudinally extending axis to enable discharging the fruit by the discharge port. The support member may be free to pivot with respect to the proximal portion of the end effector, or both the proximal portion and the support member may be pivoted by the end effector being mounted to an adapter of a robot arm and the adapter being rotated by the longitudinal axis.

While the picking tools may be specific to the fruit to be picked, the storage bay hardly needs such adaptation except perhaps in its size. So the end effector of the present invention can be applied to picking apples pears, stone fruits, citrus fruits and berries, tomatoes, cucumbers, peppers, egg-plant, squash, zucchini, artichokes etc..

When a fruit has been picked by the distal portion and is transferred to the storage bay of the intermediate portion, the distal portion is free to pick another fruit without having to dispose of the other first. Thus, several fruit hanging on a same branch of a plant can be picked one after the other in quick succession, without the end effector having to be removed from the plant in the process, until the storage bay is full.

The longitudinal dimension of the intermediate portion can be a multiple of the transversal dimension of the distal portion. The transversal dimension of the distal portion will be wide enough to accommodate a fruit to be picked; when the longitudinal dimension of the intermediate portion is a multiple thereof, several fruit will fit in it in a longitudinal row (or a staggered configuration) before the storage bay is full and has to be discharged. When the storage bay is sized to accommodate the fruit in a single row or a staggered configuration, they can effectively be prevented from rolling around in the storage bay before being discharged, and the risk the fruit being damaged in the storage bay is minimized.

Where the storage bay has distal and proximal ends, an inlet port by which the storage bay receives picked fruit from the distal portion will be formed at said distal end. The proximal end of the storage bay should be wider than the distal end, so that when the storage bay is being filled with fruit, a large number of these can gather close to the proximal end, thus minimizing the torque to which is subject a distal joint of a robot arm that carries the end effector.

The support member may be in the shape of a gutter extending in the longitudinal direction. Thus, fruit can be ejected by rotating the support member around the longitudinal axis, thereby turning downward the open side of the gutter. When the support member is cylindrical with the longitudinal axis at its center, it can be placed on a surface, and by rotating it around the longitudinal axis, the fruit can be caused to roll off the support member and onto the surface smoothly, without any abrupt drop.

In another embodiment, the support member may comprise two flaps having swing axes extending in the longitudinal direction, the discharge point being defined between longitudinally extending edges of the two flaps facing each other. Here, too, the flaps might be cylindrical with the swing axes at the centre of the respective cylinders, so as to avoid any change in height of the fruit in the discharge process. Alternatively, here, the flaps may have an arbitrary shape, and fruit may be discharged by being lowered gently while the discharge port gradually opens between facing edges of the two flaps gradually moving away from each other.

The support member can be spring-biased towards its closed position. When the support member comprises flaps as mentioned above, the strength of the spring should be sufficient to urge the flaps into their closed position when they support no fruit, but low enough for one fruit resting on one of the flaps to urge it open. Thus the flaps won't close while there is fruit left in the storage bay, but will close again once the storage bay is empty.

The end effector should further comprise a latch for locking the flap in the closed position, so that it won't open and drop fruit in the picking process, and an actuator for displacing the latch when the storage bay is to be discharged. The actuator can be a mechanical switch, to be operated by contact with the bottom of a collecting box or with other fruit already present in the collecting box. Such a mechanical switch can ensure that the flap will not open unless the distance by which the fruit will be descended is certain not to cause damage to them. Alternatively, the actuator can be operated by a remote controller, so as to prevent an accidental opening of the port due to e.g. contact with a branch.

A fruit finding sensor, e.g. a camera, may be provided in the distal portion of the end effector. By thus being spaced from a fruit to be picked by the storage bay, a potentially harmful physical contact of the sensor with the plant carrying the fruit can be avoided; further, when a fruit has been located using the sensor and is in the process of being picked, the sensor can already be used for locating other fruit to be picked in the vicinity.

The end effector may further comprise a sensor for sensing a distance between the support member and a surface underneath. Thus, discharge of fruit from the storage compartment can be disabled except when the sensor detects that the distance to a surface onto which the fruit will be discharged is small enough to prevent damage to the fruit.

According to a second aspect of the invention, the object is achieved by a fruit-picking robot comprising the end effector as described above and an articulated arm carrying the end effector.

Where a distal link of the articulated arm is connected to the end effector by a distal joint, the joint should be operable to form a right angle or an acute angle between the longitudinal axis of the end effector and a longitudinal axis of the distal link. In this way, the end effector and a distal portion of the arm can enter a collecting box from above and place the end effector in immediate vicinity of a horizontal bottom of the box, so that the fruit can be discharged gently, without dropping them. In order to make sure that the end effector can reach the bottom of the box, the length of the distal link should be not less than the height of the box. The height of the box may vary, depending on the type of fruit picked. Where the box is a standard box of EUR1 or EUR2 type, its height can be 60 or 80 cm; so the length of the distal link should be greater than at least 60, preferably 80 cm.

The distance between the distal joint of the robot arm and the distal portion of the end effector should be slightly less than one of the two horizontal dimensions of the box. In that way, for discharging the fruit, the end effector can be placed in the box parallel to one wall of the box and extending over nearly the entire length of that wall. By placing the end effector at different distances from the wall in successive discharging procedures, the fruit can be discharged in rows, thereby preventing formation of a cone. On the one hand, this ensures that space in the box is used efficiently, on the other, there is no risk of fruit being damaged when rolling down the slope of the cone.

A controller of the robot may be adapted to carry out a picking operation only while the longitudinal axis is inclined downwardly from the distal portion to the proximal portion, so that once detached from the plant, a fruit will not fall out of the distal portion but will be propelled towards the storage compartment by its own weight.

The controller may further be adapted to carry out the picking operation only if inclination of the longitudinal axis is below a first predetermined threshold, so that the fruit will advance slowly into the storage compartment without being damaged or causing damage to fruit already present.

After having picked a fruit and before discharging it, the downward inclination of the end effector should be maintained in order to prevent fruit from rolling to and fro in the storage bay or even falling out by the distal portion. Inclination may be maintained below a second predetermined threshold at that time, in order to prevent the fruit in the storage bay from changing positions before being discharged to the collecting box.

A weight sensor or torque sensor that may be present in the distal joint of the articulated arm can be used by the controller for estimating the amount of fruit picked and, based thereon, for deciding whether the storage bay is so full that it should be discharged before picking more fruit. Alternatively or additionally, the controller may be adapted to count the number of fruits picked (or rather, the number of picking operations of the end effector, and to discharge the storage bay whenever a given maximum number has been reached.

An adapter of the articulated arm should be rotatable by the longitudinal axis. Such a rotation may be necessary in order to maintain the orientation of the end effector and to prevent fruit in it from rolling around throughout the picking process, until the storage bay is to be discharged. Discharging can then be done by rotating the adapter, and, along with it, while the rest of the articulated arm is held still.

The robot may further comprise a cart which has the articulated arm mounted to it, the cart optionally having a support for a fruit collecting box which the end effector is adapted to enter for discharging fruit. The cart can be a trailer to be drawn by a tractor or the like, preferably it is an AGV (autonomous guided vehicle), capable of navigating by itself e.g. between trees of an orchard.

Further features and advantages of the invention will become apparent from the subsequent description of embodiments, referring to the appended drawings.
- Fig.1: is a schematic view of a fruit picking robot in action;
- Fig. 2: is a schematic cross section of an end effector of the robot of Fig. 1;
- Fig. 3: illustrates proximal and intermediate portions of the end effector, seen from below;
- Fig. 4: is a schematic section of the end effector along a longitudinal axis thereof, while picking a fruit;
- Fig. 5: is schematic section of the end effector along a longitudinal axis thereof, while preparing to discharge picked fruit into a collecting box;
- Fig. 6: is a cross section, analogous to Fig. 2, of an end effector according to a second embodiment of the invention; and
- Fig. 7: is a third, simplified embodiment of the end effector.

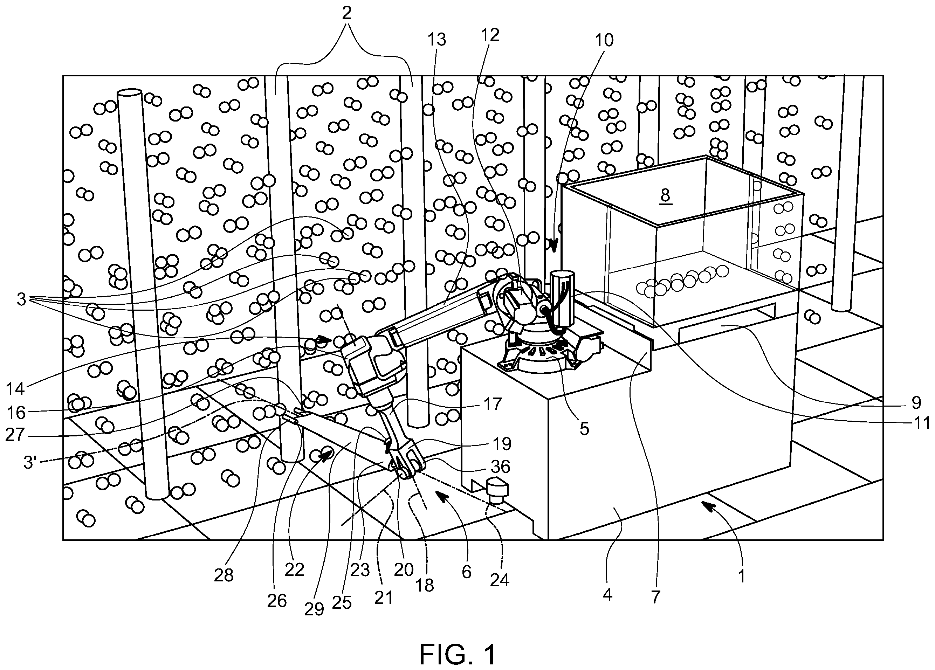

Fig. 1 is a schematic view of the robot 1 of the present invention diagram in front of a row of trees 2 bearing fruit 3 to be picked. The robot 1 comprises a cart 4, preferably an AGV, which is sized and designed to be autonomously movable in a corridor between rows of trees planted in parallel, as usual in commercial orchards. The cart 4 can have wheels or a crawler track, not shown.

On a top side of the cart 4 there is a basis 5 of an articulated arm 6, and, adjacent to the base, a support 7 for a box in which to collect the fruit. Typically, the support 7 is shaped for locking engagement with a conventional pallet box 8 of EUR 1 or EUR 2 type, i.e. having a length of 1.2 m and a width of 0.8 m or 1.0 m, respectively. A width of 0.8 m of the box 8 is preferred, since it is easier to move between the rows of trees in an orchard than a 1.0 m wide box. The width of the cart 4 is the same as that of the box 8. The profile of the support 7 is such that horizontal channels 9 at the bottom of the pallet box 8 will remain open when the pallet box 7 is placed on the support, so that a forklift can be used for placing the pallet box 8 on the support 7 and for removing it from there when full. The cart 4 may be provided with an integrated lift for loading and unloading the boxes 8.

While in Fig. 1 the support 7 is located substantially at the same height as basis 5, it can certainly also be located at a lower level, thus making it easier for the robot arm 6 to reach into the box 8 when discharging picked fruit.

The articulated arm 6 comprises a proximal motor member 10, rotatably connected to basis 5 by a vertical axis, and comprising a first motor 11 for driving this rotation. A second motor 12 is provided in member 10 to drive rotation of a proximal link 13 by a horizontal axis. An intermediate motor member 14 comprising two more motors 15, 16 is mounted to the distal end of link 13. One of these motors, 16, drives rotation of a distal link 17 by a longitudinal axis 18 thereof. At a distal end of link 17, a joint 36 and a fifth motor 19 are provided for rotating an adapter 20 by an axis 21 perpendicular to axis 18. The adapter 20 has a proximal portion 23 of an end effector 22 mounted to it.

The end effector 22 has a generally tubular or frustoconical shape, the proximal portion 23 forming the wider base of a truncated cone whose axis defines a longitudinal axis 24 of the end effector 22. In a plane perpendicular to longitudinal axis 24 the end effector has an elongate cross section. A sixth motor, not shown, is provided in the adapter 20 for rotating the end effector 22 by the longitudinal axis 24, so that in any pose the arm 6 can adopt, a longer one of the two dimensions of the cross section will always extend horizontally. Thus, a fruit finding sensor 25, typically a camera, will be located on top of the distal portion 23 in any pose of the arm 6.

The sensor 25 has a line of sight which is parallel to the longitudinal axis 24. It provides images of what lies on and around the axis 24 to a controller, not shown, thus enabling the controller to identify fruit to be picked, choose one, 3', and aim the end effector 22 at it.

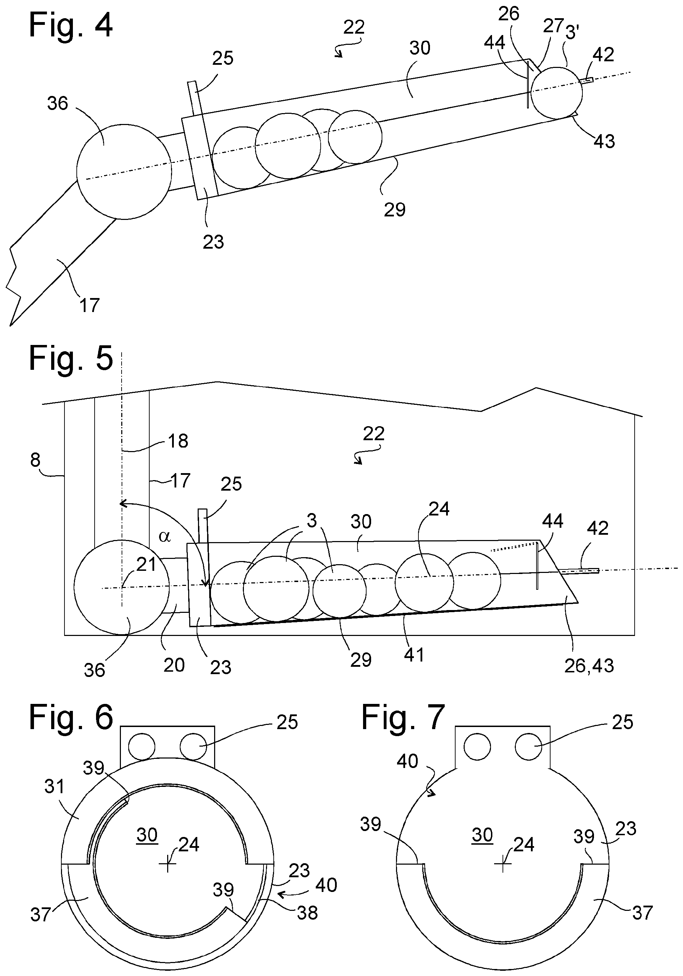

A distal portion 26 of the end effector 22 has an inlet opening 27 designed to be placed over the fruit 3' chosen to be picked and means 28 for severing a stalk connecting the fruit 3 to the tree once the fruit 3 is soundly received in the inlet opening. Generally, these severing means 28 can be of any type known in the art. As an example, the severing means 28 may comprise fingers 42 (cf. Fig. 4) on both sides of the inlet opening 27 that are displaceable or inflatable so as to seize a fruit, so that its stalk can be severed by a receding movement of the end effector 22, and a spout 43 projecting below the fingers 42 and the fruit seized by them, in order to receive the fruit when it is released by the fingers 42, and to guide it into a storage bay formed in an intermediate portion 29 of the end effector 22.

When actually picking the fruit 3', the end effector 22 is held with its longitudinal axis 24 inclined slightly downward from the distal portion 26 to the proximal portion 23, so that the fruit 3', when detached from the tree and released by the severing means 28, will roll or slide from the inlet opening 27 to the storage bay of the intermediate portion 29.

The distance from the tips of fingers 42 to the distal joint 36 is slightly less than the length of box 8, i.e. 1.20 m, so that the end effector 22 can reach into the box with its longitudinal axis 24 parallel to a sidewall of the box.

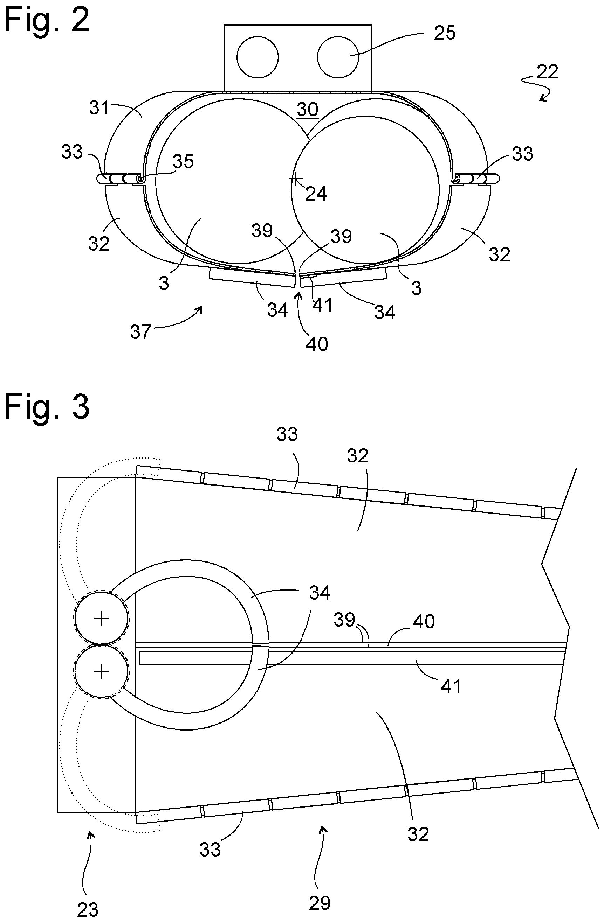

Fig. 2 is a cross section of the intermediate portion 29 of end effector 22 in a plane perpendicular to longitudinal axis 24. The storage bay 30 is delimited by an upper shell 31, and a support member 37 formed e.g. from plastic or sheet metal. The support member 37 comprises two flaps 32 connected to longitudinal edges of the upper shell 31 by hinges 33. The fruit finding sensor 25, e.g. a stereo camera capable of locating fruit in three dimensions, is mounted on top of the upper shell 31. The flaps 32, when locked in the position shown, form a concave surface where picked fruit 3 assumes a stable position and does not roll. Inclination of the end effector 22 along axis 24, as shown in Fig. 4, causes the fruit 3 to assume a staggered configuration, alternatingly displaced to the right and to the left from axis 24. At the proximal end, the storage bay 30 may be wide enough to allow the fruit to lie in two rows, side by side on either side of the axis 24. In contrast, inlet opening 27 is just wide enough to allow one fruit at a time to pass through.

Fig. 3 shows the proximal and intermediate portions 23, 29 of end effector 22 in a view from below. Latches 34 are rotatably mounted to the proximal portion 23. In picking operation, the latches 34 extend below the flaps 31 and lock these in the closed position of Fig. 2, as shown in solid lines in Fig. 3. When the storage bay 30 is full and its content is to be discharged, the latches 34 are rotated into the unlocked position shown in phantom in Fig. 3 by an actuator provided in proximal portion 23, so that the flaps 31 will swing open under the weight of the fruit in the storage bay 30. A proximity sensor 41 extends along an edge of at least one of the flaps 32 opposite to its hinge 33.

The hinges 33 may be provided with a spring, e.g. a torsion spring 35, which urges the flaps 32 towards the closed position but is strong enough to hold them there only when they carry no fruit. Thus, the spring 35 can raise the flaps 31 again after all fruit has been discharged, and the latches 34 can be rotated back into the position shown in solid lines, thereby locking the flaps 31 in the closed position. Alternatively, when the latches 34 are being rotated back from the unlocked to the locked position, their tips will press against the flaps 32 and thus swing them back in into the closed position.

As can be understood from Fig. 2, when the flaps 32 swing down, and a discharge port 40 between their facing edges widens, fruit 3 supported on the flaps 32 is gradually descended until the discharge port 40 finally becomes wide enough to let it pass. If the opening movement of the flaps 32 is controlled appropriately, the fruit 3 may already be supported by a surface below, i.e. by the bottom of box 8 or by fruit in the box 8, before the discharge port 40 actually gets wide enough to let the picked fruit 3 pass. Thus, dropping the fruit 3 in the discharge process can be avoided completely.

Fig. 4 shows the end effector 22 in the process of picking fruit.

Between the distal portion 26 and the storage bay 30, a valve flap 44 can be provided. The valve flap 44 swings by an axis close to its upper edge, and from a position in which it blocks the passage from the distal portion 26 to the storage bay 30, as shown in Fig. 4,. it is displaceable towards the storage bay 30 only, so that while the end effector is inclined downwardly, a picked fruit 3' can displace the flap 44 and reach the storage bay, but if the end effector must assume an upwardly inclined pose, fruit in the storage bay 30 can press the flap 44, but not open it.

While inclination of the intermediate link 17 may vary widely depending on the height above ground of a fruit 3' being picked, the inclination of the end effector is controlled to vary as little as possible, so that fruit 3 in the storage bay 30 won't move while more fruit is added.

The maximum inclination under which picking of fruit is enabled may vary depending on the variety of fruit. For apples, it may be higher than for soft fruit such as e.g. kiwi. It may also vary depending on how full the storage bay 30 is: the fuller it is, the shorter is the path the fruit can travel from the distal portion 26 before it comes to rest in the storage bay; so a steeper inclination can be allowed the fuller the storage bay 30 is.

The controller may be programmed to count the number of fruit picked, and to judge, based on this count, whether the storage bay 30 is full and should be discharged or not. Alternatively, the controller may estimate the weight of the fruit in storage bay 30 based on the torques acting on motor 19 and the motor that controls rotation of the end effector 22 by axis 24. When this weight exceeds a predetermined threshold, the storage bay 30 is judged to be full, and the fruit in it must be discharged. To this effect, the end effector 22 must be moved into the pallet box 8. The length of the proximal link 13 is such that when it is inclined towards the pallet box 8, the intermediate motor member 14 can be placed above an upper edge of the box 8 so that the distal link 17, by extending vertically downward, reaches into the box 8 and can place the end effector 22 near its bottom. Preferably, the end effector 22 maintains its inclination in the process, in order to prevent the fruit from rolling, so that when the end effector 22 is at the bottom of the box, the axes 18, 24 of the distal link 17 and of the end effector 22 form an acute angle α. To make sure the end effector can always reach the bottom of the box, the length of the distal link 17 should be just equal to or slightly greater than the height of box 8.

Proximity sensor 40 detects whether the distance of the end effector 22 to the bottom of the box 8 or to fruit already present in pallet box 8 is below a predetermined threshold; only in that case, the controller will enable unlocking the flaps 32.

The proximity sensor can provide a quantitative measure of the distance to the fruit in pallet box 8, or it can provide a binary output which merely indicates whether the distance is below a threshold or not. The latter type of sensor is cheaper, but it has the disadvantage that inside the box 8 the advancing speed of the end effector 22 must be limited to a safe speed which is so low that, when it is detected that the distance has dropped below the threshold, the end effector 22 can safely be bought to a halt before it bumps into the fruit. The controller may record the level of fruit in the box 8 thus detected; when the storage bay 30 has to be discharged the next time, the controller can have the end effector 22 enter the box 8 at a speed considerably higher than said safe speed, and reduce it to said safe speed only in the vicinity of said recorded level. Thus the duration of the discharge process can be shortened considerably.

Before actually discharging the fruit, the end effector 22 can be turned by axis 21 into an orientation where its bottom side is substantially horizontal, so that even close to the distal end of the storage bay 30, fruit will not fall out when the storage bay 30 when opened, but will be lowered smoothly and gradually.

By rotating the latches 34 towards their unlocked position, the flaps 13 gradually swing downward, and the fruit gradually slide towards the outlet port which is opening between the flaps 31, and will come to rest on the bottom of the box 8 or on other fruit already present in the box before the port becomes wide enough for the fruit to pass.

Fig. 6 is a cross section, perpendicular to longitudinal axis 24, of an end effector according to a second embodiment of the invention. The storage bay 30 is cylindrical or conical, comprising a support member 37 which is slidably received in a circular rail 38 of proximal portion 23, so as to be rotatable around longitudinal axis 24. In a closed position, longitudinal edges 39 of support member 37 are at equal height and overlap with edges of upper shell 31. In Fig. 6, the support member 37 is rotated clockwise out of said closed position, so that a discharge port 40 is starting to open between the support member 37 and the upper shell 31.

In the embodiment of Fig. 7, the support member 37 is fixed to the proximal portion 23 of the end effector, and the end effector 22 is fixed to adapter 20, so that the above-mentioned sixth motor rotates not only adapter 20 but also the complete end effector 22 by the latter's longitudinal axis 24. In the process, fruit will roll or slide on support member 27 until they pass one of its longitudinal edges 39 and are thus discharged from storage bay 30.

### Reference numerals

- 1: robot
- 2: tree
- 3: fruit
- 4: cart
- 5: basis
- 6: arm
- 7: support
- 8: pallet box
- 9: channel
- 10: proximal motor member
- 11: motor
- 12: motor
- 13: proximal link
- 14: intermediate motor member
- 15: 7-8 motor
- 16: Motor
- 17: distal link
- 18: axis
- 19: motor
- 20: adapter
- 21: axis
- 22: end effector
- 23: proximal portion
- 24: longitudinal axis
- 25: fruit finding sensor
- 26: distal portion
- 27: inlet opening
- 28: severing means
- 29: intermediate portion
- 30: storage bay
- 31: upper shell
- 32: flap
- 33: hinge
- 34: latch
- 35: spring
- 36: joint
- 37: support member
- 38: rail
- 39: longitudinal edge
- 40: discharge port
- 41: proximity sensor
- 42: finger
- 43: spout
- 44: valve flap

## Claims

1. An end effector (22) for a fruit picking robot (1), a distal portion (26) of the end effector (22) comprising tools (28) for seizing and detaching a fruit (3) from its mother plant (2), a proximal portion (23) comprising an interface for mounting the end effector (22) to a robot arm (6), and a storage bay (30) for picked fruit (3), which is elongate in a longitudinal direction, **characterized in that** the storage bay (30) has a discharge port (40) extending along the full length of the storage bay (30) in the longitudinal direction (24) and a fruit support member (37) having a longitudinally extending edge (39) which delimits the discharge port (40).

2. The end effector of claim 1, wherein the support member (37) is pivotable by a longitudinally extending axis (24) to enable discharging the fruit by the discharge port (40).

3. The end effector of claim 1 or 2, wherein the storage bay (30) is provided in an intermediate portion (29) of the end effector (22), between the distal and proximal portions (26, 23).

4. The end effector of any of the preceding claims, wherein the support member (37) is in the shape of a gutter extending in the longitudinal direction (24).

5. The end effector of any of the preceding claims, wherein the support member (37) comprises two flaps (32) having swing axes extending in the longitudinal direction and wherein the discharge port (40) is defined between longitudinally extending edges of the two flaps (32) facing each other.

6. The end effector of claim 5, further comprising a latch (34) for locking the support member (37) in the closed position, and an actuator for displacing the latch (34).

7. The end effector of any of the preceding claims, wherein a fruit finding sensor (25) is provided in the distal portion (23) of the end effector (22).

8. The end effector of any of the preceding claims, further comprising a sensor (41) for sensing a distance between the fruit support member( 37) and a surface adjacent to it.

9. A fruit-picking robot (1) comprising the end effector (22) of any of the preceding claims and an articulated arm (6) carrying the end effector (22).

10. The fruit-picking robot of claim 9, wherein a distal link (17) of the arm (6) is connected to the end effector (22) by a distal joint (36), and wherein the joint (36) is operable to form a right angle or an acute angle (α) between the longitudinal axis (24) of the end effector (22) and a longitudinal axis (18) of the distal link (17).

11. The fruit-picking robot of claim 9 or 10, further comprising a controller adapted to carry out a picking operation only while the longitudinal axis (24) is inclined downwardly from the distal portion (26) towards the proximal portion (23), wherein, optionally, the controller is adapted to carry out the picking operation only if inclination of the longitudinal axis (24) is below a first predetermined threshold.

12. The fruit-picking robot of claim 11, wherein the controller is adapted to keep the longitudinal axis (24) downwardly inclined and, optionally, below a second predetermined threshold after having picked a fruit and before discharging it.

13. The fruit-picking robot of any of claims 9 to 12, further comprising a weight sensor or torque sensor for sensing weight or torque of the end effector (22), the controller being adapted to discharge the fruit when output of the sensor exceeds a predetermined threshold.

14. The fruit-picking robot of any of claims 9 to 13, wherein an adapter (20) of the articulated arm (6) is rotatable by the longitudinal axis between a position in which the discharge port (40) is facing up and a position in which the discharge port (40) is facing down.

15. The fruit-picking robot of any of claims 9 to 14, further comprising a cart (4) which has the articulated arm (6) mounted to it, the cart (4) optionally having a support (7) for a fruit collecting box (8) which the end effector (22) is adapted to enter for discharging fruit.

## Patentansprüche

1. Ein Endeffektor (22) für einen Obsternteroboter (1), wobei ein distaler Abschnitt (26) des Endeffektors (22) Werkzeuge (28) zum Ergreifen und Ablösen einer Frucht (3) von ihrer Mutterpflanze (2) aufweist, wobei ein proximaler Abschnitt (23) eine Schnittstelle zum Montieren des Endeffektors (22) an einem Roboterarm (6) aufweist, und wobei ein Aufnahmeraum (30) für geerntete Früchte (3) vorgesehen ist, der sich in einer Längsrichtung erstreckt, **dadurch gekennzeichnet, dass** der Aufnahmeraum (30) eine sich über die gesamte Länge des Aufnahmeraums (30) in der Längsrichtung (24) erstreckende Auslassöffnung (40) und ein Fruchtstützelement (37) aufweisende eine sich längs erstreckenden Kante (39) aufweist, welche die Auslassöffnung (40) begrenzt.

2. Der Endeffektor nach Anspruch 1, wobei das Stützelement (37) um eine sich in Längsrichtung (24) erstreckende Achse schwenkbar ist, um ein Ausstoßen der Frucht durch die Auslassöffnung (40) zu ermöglichen.

3. Der Endeffektor nach Anspruch 1 oder 2, wobei der Aufnahmeraum (30) in einem Zwischenabschnitt (29) des Endeffektors (22) zwischen dem distalen und dem proximalen Abschnitt (26, 23) angeordnet ist.

4. Der Endeffektor nach einem der vorhergehenden Ansprüche, wobei das Stützelement (37) die Form einer sich in der Längsrichtung (24) erstreckenden Rinne aufweist.

5. Der Endeffektor nach einem der vorhergehenden Ansprüche, wobei das Stützelement (37) zwei Klappen (32) umfasst, die Schwenkachsen aufweisen, die sich in der Längsrichtung erstrecken, und wobei die Auslassöffnung (40) zwischen einander zugewandten, sich längs erstreckenden Kanten der beiden Klappen (32) definiert ist.

6. Der Endeffektor nach Anspruch 5, weiterhin umfassend eine Verriegelung (34) zum Verriegeln des Stützelements (37) in einer geschlossenen Position und einen Aktuator zum Verstellen der Verriegelung (34).

7. Der Endeffektor nach einem der vorhergehenden Ansprüche, wobei im distalen Abschnitt (26) des Endeffektors (22) ein Fruchterkennungssensor (25) vorgesehen ist.

8. Der Endeffektor nach einem der vorhergehenden Ansprüche, weiterhin umfassend einen Sensor (41) zum Erfassen eines Abstands zwischen dem Fruchtstützelement (37) und einer daran angrenzenden Oberfläche.

9. Ein Obsternteroboter (1) aufweisende den Endeffektor (22) nach einem der vorhergehenden Ansprüche und einen gelenkigen Arm (6), der den Endeffektor (22) trägt.

10. Der Obsternteroboter nach Anspruch 9, wobei ein distales Glied (17) des Arms (6) über ein distales Gelenk (36) mit dem Endeffektor (22) verbunden ist, und wobei das Gelenk (36) betreibbar ist, um einen rechten Winkel oder einen spitzen Winkel (α) zwischen der Längsachse (24) des Endeffektors (22) und einer Längsachse (18) des distalen Glieds (17) zu bilden.

11. Der Obsternteroboter nach Anspruch 9 oder 10, weiterhin umfassend eine Steuerung, die so ausgelegt ist, einen Erntevorgang nur dann durchzuführen, wenn die Längsachse (24) vom distalen Abschnitt (26) zum proximalen Abschnitt (23) hin nach unten geneigt ist, wobei die Steuerung optional so ausgelegt ist, den Erntevorgang nur dann durchzuführen, wenn die Neigung der Längsachse (24) unterhalb eines ersten vorbestimmten Schwellenwerts liegt.

12. Der Obsternteroboter nach Anspruch 11, wobei die Steuerung so ausgelegt ist, die Längsachse (24) nach dem Ernten einer Frucht und vor deren Ausstoßen nach unten geneigt zu halten und optional unterhalb eines zweiten vorbestimmten Schwellenwerts.

13. Der Obsternteroboter nach einem der Ansprüche 9 bis 12, weiterhin umfassend einen Gewichtssensor oder Drehmomentsensor zum Erfassen eines Gewichts oder Drehmoments des Endeffektors (22), wobei die Steuerung so ausgelegt ist, die Frucht auszustoßen, wenn der Ausgang des Sensors einen vorbestimmten Schwellenwert überschreitet.

14. Der Obsternteroboter nach einem der Ansprüche 9 bis 13, wobei ein Adapter (20) des gelenkigen Arms (6) um die Längsachse zwischen einer Position, in der die Auslassöffnung (40) nach oben gerichtet ist, und einer Position, in der die Auslassöffnung (40) nach unten gerichtet ist, drehbar ist.

15. Der Obsternteroboter nach einem der Ansprüche 9 bis 14, weiterhin umfassend einen Wagen (4), an dem der gelenkige Arm (6) montiert ist, wobei der Wagen (4) optional eine Auflage (7) für eine Fruchtsammelbox (8) aufweist, in welche der Endeffektor (22) zum Ausstoßen der Früchte eingeführt werden kann.

## Revendications

1. Effecteur d'extrémité (22) pour robot de cueillette de fruits (1), une partie distale (26) de l'effecteur d'extrémité (22) comprenant des outils (28) pour saisir et détacher un fruit (3) de sa plante mère (2), une partie proximale (23) comprenant une interface pour monter l'effecteur d'extrémité (22) sur un bras robotisé (6), et une baie de stockage (30) pour les fruits cueillis (3), qui est allongée dans le sens longitudinal, **caractérisé en ce que** la baie de stockage (30) présente un orifice d'évacuation (40) s'étendant sur toute la longueur de la baie de stockage (30) dans le sens longitudinal (24) et un élément de support de fruits (37) présentant un bord longitudinal (39) qui délimite l'orifice d'évacuation (40).

2. Effecteur d'extrémité selon la revendication 1, l'élément de support (37) pouvant pivoter par un axe s'étendant longitudinalement (24) pour permettre la décharge du fruit par l'orifice de décharge (40).

3. Effecteur d'extrémité selon la revendication 1 ou 2, la baie de stockage (30) étant située dans une partie intermédiaire (29) de l'effecteur d'extrémité (22), entre les parties distale et proximale (26, 23).

4. Effecteur d'extrémité selon l'une quelconque des revendications précédentes, l'élément de support (37) ayant la forme d'une gouttière s'étendant dans la direction longitudinale (24).

5. Effecteur d'extrémité selon l'une quelconque des revendications précédentes, l'élément de support (37) comprenant deux volets (32) ayant des axes de basculement s'étendant dans la direction longitudinale et l'orifice de décharge (40) étant défini entre des bords s'étendant longitudinalement des deux volets (32) se faisant face l'un à l'autre.

6. Effecteur d'extrémité selon la revendication 5, comprenant en outre un verrou (34) pour verrouiller l'élément de support (37) dans la position fermée, et un actionneur pour déplacer le verrou (34).

7. Effecteur d'extrémité selon l'une quelconque des revendications précédentes, un capteur de recherche de fruits (25) étant situé dans la partie distale (23) de l'effecteur d'extrémité (22).

8. Effecteur d'extrémité selon l'une quelconque des revendications précédentes, comprenant en outre un capteur (41) pour détecter une distance entre l'élément de support de fruit (37) et une surface adjacente à celui-ci.

9. Robot de cueillette de fruits (1) comprenant l'effecteur d'extrémité (22) selon l'une quelconque des revendications précédentes et un bras articulé (6) portant l'effecteur d'extrémité (22).

10. Robot de cueillette de fruits selon la revendication 9, une liaison distale (17) du bras (6) étant reliée à l'effecteur d'extrémité (22) par une articulation distale (36), et l'articulation (36) pouvant être actionnée pour former un angle droit ou un angle aigu (α) entre l'axe longitudinal (24) de l'effecteur d'extrémité (22) et un axe longitudinal (18) de la liaison distale (17).

11. Robot de cueillette de fruits selon la revendication 9 ou 10, comprenant en outre un dispositif de commande conçu pour effectuer une opération de cueillette uniquement tandis que l'axe longitudinal (24) est incliné vers le bas depuis la partie distale (26) vers la partie proximale (23), éventuellement, le dispositif de commande étant conçu pour effectuer l'opération de cueillette uniquement si l'inclinaison de l'axe longitudinal (24) est inférieure à un premier seuil prédéfini.

12. Robot de cueillette de fruits selon la revendication 11, le dispositif de commande étant conçu pour maintenir l'axe longitudinal (24) incliné vers le bas et, éventuellement, en dessous d'un second seuil prédéfini après avoir cueilli un fruit et avant de le décharger.

13. Robot de cueillette de fruits selon l'une quelconque des revendications 9 à 12, comprenant en outre un capteur de poids ou un capteur de couple pour détecter le poids ou le couple de l'effecteur d'extrémité (22), le dispositif de commande étant conçu pour décharger le fruit lorsque la sortie du capteur dépasse un seuil prédéfini.

14. Robot de cueillette de fruits selon l'une quelconque des revendications 9 à 13, un adaptateur (20) du bras articulé (6) pouvant être amené à tourner par l'axe longitudinal entre une position dans laquelle l'orifice de décharge (40) est orienté vers le haut et une position dans laquelle l'orifice de décharge (40) est orienté vers le bas.

15. Robot de cueillette de fruits selon l'une quelconque des revendications 9 à 14, comprenant en outre un chariot (4) sur lequel est monté le bras articulé (6), le chariot (4) ayant éventuellement un support (7) pour une caisse de collecte de fruits (8) dans laquelle l'effecteur d'extrémité (22) est conçu pour entrer afin de décharger des fruits.
